# FASCICULE DE BREVET EUROPEEN

(11) **EP 0 611 973 B1**
(45) Date de publication et mention de la délivrance du brevet: **12.09.2001**
(21) Numéro de dépôt: 94400303.7
(22) Date de dépôt: 11.02.1994
(51) Int. Cl.: G02B 6/16, C03B 37/028, C03B 37/012

(54) **Guides optiques multicoeurs de grande précision et de petites dimensions et procédé de fabrication de ces guides**
Optische Mehrkern-Wellenleiter von hoher Präzision und von geringen Abmessungen und Herstellungsverfahren
Multicore optical waveguides of high precision and small size and manufacturing process

(30) Priorité: 15.02.1993 FR 9301674
(43) Date de publication de la demande: 24.08.1994
(73) Titulaire: FRANCE TELECOM, 75015 Paris (FR)
(72) Inventeur: Le Noane, Georges, F-22730 Tregastel (FR); Grosso, Philippe, F-22300 Servel (FR); Hardy, Isabelle, F-22700 Louannec (FR)
(74) Mandataire: Dubois-Chabert, Guy

(56) Documents cités:
- EP-A- 0 089 498
- EP-A- 0 215 674
- EP-A- 0 372 450
- EP-A- 0 519 834
- PATENT ABSTRACTS OF JAPAN vol. 9, no. 329 (P-416) 24 Décembre 1985 & JP-A-60 154 205 (SUMITOMO DENKI KOGYO) 13 Aoüt 1985

## Description

La présente invention concerne des guides optique multicoeurs de grande précision et de petites dimensions et leur procédé de fabrication.

La présente invention s'applique tout particulièrement à la réalisation de guides optiques monomodes très économiques mais peut aussi être appliquée à la fabrication de guides optiques multimodes.

On connait déjà certains types de guides optiques multicoeurs par les documents suivants :
"High density multicore-fiber cable" : S. Inao and Al. in Proc. 28th int.- Wire and cable symp.- novembre 1978
"New type of multicore-fiber" - Proc. DFC-Avril 1982 : N. Kashima and Al.
"Analysis and experiments with crosstalk between adjacent graded-index optical fibers" -J. lightwave Technol. - Vol.LT3 - Août 1985

Par ailleurs le brevet FR-A-2510545, intitulé "Procédé de préparation d'une fibre optique multiple", décrit un moyen de filer des préformes cylindriques élémentaires pour les regrouper en un assemblage de fibres optiques élémentaires en comblant les vides entre les fibres par l'introduction d'une matière intermédiaire liquide consistant en au moins un composé choisi parmi les oxydes formant des réseaux vitreux, les oxydes modifiant des verres et les oxydes intermédiaires. Ce procédé est destiné à empêcher la formation de bulles à l'étirage.

On connait aussi les brevets FR-A-2551881 et FR-A-2551885 qui décrivent des procédés de fabrication d'une fibre optique multicoeurs, notamment par disparition partielle mais directive du coeur de la préforme, permettant ainsi de séparer les deux coeurs de la future fibre optique.

Ces différents documents
- soit ne décrivent que le principe de guides multicoeurs et en particulier de guides multicoeurs multimodes,
- soit soulignent les inconvénients de ces guides en matière de repérage et de précision sans remédier à ces inconvénients,
- soit décrivent des procédés qui conduisent à un simple assemblage de fibres, ce qui ne résout en rien le problème de la grande précision nécessaire pour raccorder ces guides dans des conditions économiques, le problème du repérage et le problème de l'obtention d'une faible taille conduisant à la densification maximale,
- soit décrivent des procédés qui certes mènent à deux coeurs par exemple, dans un faible volume, mais n'aboutissent en aucune manière à des guides de qualité avec la précision géométrique requise.

Aucun de ces documents ne permet d'aboutir à des guides multicoeurs de grande précision et facilement repérables, en vue d'un raccordement simple et efficace, et de petites dimensions pour aboutir à une réelle densification des câbles de fibres optiques par exemple utilisables pour transmettre des informations à des abonnés d'un réseau de télécommunications.

La présente invention a pour but de remédier à ces inconvénients.

Elle a pour objet des guides optiques multicoeurs de grande précision et leur procédé de fabrication comme défini dans les revendications 1 et 6.

EP-A-0 215 674 (ANDREW CORP.) décrit des coupleurs à fibres optiques conservant la polarisation. Les fibres sont formées par étirage de préformes préalablement usinées. Un coupleur est obtenu en assemblant les fibres dans un tube Vycor mis en dépression et chauffé.

De façon précise, la présente invention a pour objet un guide optique multicoeurs conformément à la revendication 1.

Les guides optiques élémentaires peuvent être monomodes, le guide multicoeurs étant alors dit "monomode".

Les contours du guide multicoeurs permettent un repérage facile pour une identification dans l'espace des guides optiques élémentaires.

Le guide multicoeurs objet de l'invention est susceptible d'être réalisé avec des dimensions très inférieures à celles auxquelles on aboutirait avec un nombre de fibres optiques égal au nombre de guides élémentaires du guide multicoeurs.

De plus, il est possible d'optimiser les caractéristiques géométriques des guides élémentaires et de positionner ceux-ci pour que le guide multicoeurs ait de très petites dimensions et que le couplage optique de ce guide multicoeurs à un guide semblable soit minimisé pour ne pas être gênant lors d'une utilisation avec des systèmes de transmission à bas ou haut débit, sur des distances du genre de celles qu'on rencontre notamment dans les réseaux "d'abonnés optiques".

Le guide optique multicoeurs objet de l'invention aboutit ainsi à une considérable densification par rapport à un assemblage élémentaire de fibres optiques (en nombre égal à celui des coeurs du guide multicoeurs), tout en permettant d'établir des liaisons optiques de très bonne qualité, ce qui a pour conséquence de réduire le coût de chaque guide élémentaire par rapport au coût d'une fibre optique et de réduire considérablement les coûts des câbles, de leur pose et du génie civil associé.

Le guide optique multicoeurs objet de l'invention permet aussi, par la grande précision des distances entre guides élémentaires et la grande précision de l'emplacement de ces guides par rapport aux contours extérieurs du guide multicoeurs, un repérage simple et un positionnement très simple dans un système de référence, ce qui permet un raccordement de deux guides multicoeurs de façon très efficace, c'est-à-dire avec des pertes au raccordement parfaitement acceptables pour les réseaux d'abonnés, ce raccordement étant aussi très économique puisqu'aucun réglage intermédiaire n'est nécessaire et que les opérations indispensables telles que dénudage du guide, coupe du guide et mise en place dans le référentiel d'alignement se font pour l'ensemble des coeurs du guide multicoeurs.

Le guide multicoeurs objet de l'invention peut comprendre quatre guides optiques élémentaires dont les axes forment, en coupe transversale, les sommets d'un carré, les contours de la matrice formant quatre portions identiques de cylindres de révolution dont les axes coïncident respectivement avec les axes des guides optiques élémentaires.

Chaque guide optique élémentaire du guide multicoeurs objet de l'invention peut être monomode.

La présente invention a aussi pour objet un procédé de fabrication d'un guide optique multicoeurs conforme à l'invention, ce procédé étant caractérisé en ce qu'il comprend les étapes successives suivantes :
- on fabrique une pluralité de préformes élémentaires de grande précision, cette précision étant compatible avec celle qui est désirée pour le guide multicoeurs,
- on usine ces préformes élémentaires avec une grande précision et de manière à obtenir, après assemblage de ces préformes, le modèle géométrique choisi pour le guide optique multicoeurs,
- on assemble les préformes élémentaires ainsi usinées suivant ce modèle géométrique choisi,
- on soude partiellement les préformes élémentaires usinées et ainsi assemblées, au moyen d'une amorce d'étirage, et
- on réalise un étirage de grande précision de l'assemblage des préformes élémentaires muni de l'amorce d'étirage afin d'obtenir le guide optique multicoeurs.

Pour aboutir à un guide multicoeurs de très petites dimensions, on fabrique des préformes élémentaires de dimensions optimisées, compatibles avec celles que l'on souhaite pour le guide multicoeurs.

Pour ce faire, il convient d'utiliser un procédé de fabrication de préforme de très grande précision.

On utilise par exemple le procédé de très grande précision décrit dans le document suivant, auquel on se reportera :

EP-A-0519834, "Procédé et dispositif pour la fabrication de préformes pour fibres optiques" (voir aussi la demande de brevet français n° 9107669 du 21 juin 1991).

Ainsi, selon un mode de mise en oeuvre particulier du procédé objet de l'invention, utilisant le procédé décrit dans ce document, chaque préforme élémentaire est fabriquée selon un procédé comprenant les étapes successives suivantes :
- on fabrique un barreau creux de silice à paroi épaisse et de grande précision géométrique,
- on réalise, à l'aide d'un four, un dépôt interne en phase vapeur d'un revêtement vitreux dans ce barreau, à l'aide d'un mélange de composés gazeux que l'on fait circuler dans le barreau, ces composés étant aptes à engendrer le revêtement par réaction entre eux, et
- on réalise un rétreint du barreau.
Dans le procédé décrit dans le document ci-dessus, les diamètres nominaux interne et externe du barreau creux de silice sont connus et précis avec une tolérance inférieure à 0,01 mm.

Il en résulte qu'à la suite du dépôt qui s'opère de façon très homogène et du rétreint lui aussi régulier et homogène, la préforme obtenue est de très grande régularité et de très grande précision, en particulier en ce qui concerne le diamètre externe précis et régulier et la concentricité du coeur déposé et de la gaine optique déposée par rapport à la gaine extérieure.

Les progrès réalisés dans ce domaine permettent par ailleurs, à condition d'utiliser pour le barreau creux une silice de qualité suffisante, par exemple une silice synthétique de bonne qualité, d'optimiser la taille du guide obtenu par étirage de la préforme ou, dit d'une autre manière, le volume déposé, au point de considérer que le guide obtenu est de très bonne qualité avec un rapport entre le diamètre de la gaine optique déposée et le diamètre du coeur réduit à une valeur d'environ 3, alors que dans une fibre classique monomode il est de 5 à 6.

Ceci signifie que, pour la fibre finale obtenue à partir d'une telle préforme, dans le schéma classique connu et normalisé de 125 µm de diamètre extérieur, le coeur du guide monomode représente environ 8 µm (comme dans une fibre monomode classique) et la gaine optique environ 24 µm au lieu de 40 à 50 µm dans une fibre classique.

Le procédé objet de l'invention tient compte de ces progrès considérables susceptibles de fournir des préformes cylindriques de grande précision pour le diamètre extérieur et pour la concentricité du coeur et de la gaine obtenues par le procédé décrit dans le document ci-dessus ou par tout autre procédé capable de fournir le même degré de précision pour de telles préformes, mais il utilise une optimisation supplémentaire visant à fabriquer des préformes de très haute précision, aux dimensions adaptées à un objectif de l'invention, à savoir réaliser des guides optiques multicoeurs de très faibles tailles.

Ainsi les préformes élémentaires réalisées dans le procédé objet de l'invention auront des caractéristiques géométriques adaptées au minimum nécessaire à la réalisation des guides multicoeurs.

Dans l'exemple précité, la gaine de 24 µm de diamètre est entourée d'une épaisseur de silice conduisant à un diamètre de 125 µm, soit 3,7% du volume de la fibre.

On sait que ces dimensions normalisées de la fibre sont conditionnées par plusieurs éléments parmi lesquels : la résistance de la fibre aux courbures et microcourbures, la résistance mécanique, l'atténuation.

Or, plusieurs facteurs interviennent aussi dans le coût de la réalisation de réseaux d'abonnés très économiques : le coût de la fibre, le coût du câble et bien sûr le coût de l'ingéniérie de pose et le génie civil.

Inversement, compte tenu des faibles distances de transmission, l'atténuation extrêmement faible de la fibre n'est pas un critère déterminant.

L'invention vise à définir un nouveau guide optique et à optimiser les paramètres de densification et de coût unitaire de ce guide (de préférence monomode).

Dans l'invention, les proportions des préformes élémentaires sont choisies pour qu'elles soient compatibles avec le guide multicoeurs désiré, et les paramètres optogéométriques des guides élémentaires (diamètre de coeur, différence entre l'indice optique du coeur et celui de la gaine optique) sont choisies pour optimiser leur comportement dans le guide multicoeurs désiré (réduction de la diaphonie, sensibilité aux courbures et micro-courbures, atténuation visée ...).

Le procédé objet de l'invention comprend donc la fabrication de préformes de grande précision mais aux dimensions et aux caractéristiques optogéométriques optimisées pour aboutir aux éléments du guide optique multicoeurs désiré.

Ainsi les préformes obtenues peuvent être, compte tenu de leur grande précision géométriques, usinées avec une grande précision, selon une disposition conforme au modèle de guide optique multicoeurs désiré, puis assemblées, présoudées et étirées avec une grande précision.

L'usinage et l'assemblage de ces préformes constituent donc deux étapes essentielles du procédé pour d'une part obtenir les dimensions et les formes voulues pour les préformes élémentaires et d'autre part obtenir un assemblage de préformes avec des dimensions très précises qui garantiront un étirage de grande précision et donc l'obtention d'un guide multicoeurs de grande précision.

Selon un mode de mise en oeuvre particulier du procédé objet de l'invention, l'usinage de chaque préforme élémentaire comprend la formation, sur celle-ci, d'un ou d'une pluralité de méplats parallèlement à l'axe de cette préforme élémentaire, permettant l'assemblage des préformes élémentaires suivant le modèle géométrique choisi.

Dans une réalisation particulière, on fabrique quatre préformes élémentaires identiques, on forme sur chacune de celles-ci deux méplats identiques et perpendiculaires, qui ont une droite commune et qui délimitent une portion de cylindre de révolution autour de l'axe de cette préforme élémentaire, de manière que celle-ci admette un plan de symétrie contenant l'axe de cette préforme élémentaire et la droite commune aux deux méplats, et on assemble les quatre préformes élémentaires ainsi usinées, pour obtenir un ensemble dans lequel les quatre axes des préformes élémentaires occupent, en coupe transversale, les sommets d'un carré, et dont les contours forment quatre portions de cylindre de révolution dont les axes coïncident respectivement avec les axes des préformes élémentaires.

De préférence, l'assemblage est muni d'un revêtement protecteur lors de son étirage.

De préférence également, ce revêtement protecteur est en outre muni d'un moyen de repérage des guides optiques élémentaires du guide multicoeurs formé.

La présente invention sera mieux comprise à la lecture de la description d'exemples de réalisation donnés ci-après à titre purement indicatif et nullement limitatif, en faisant référence aux dessins annexés sur lesquels :
- la figure 1 est une vue schématique d'une section transversale d'un exemple de guide optique multicoeurs de grande précision et de très petites dimensions selon l'invention, muni de quatre guides optiques élémentaires,
- la figure 2 est une vue schématique d'une section transversale de préforme élémentaire sur laquelle sont mentionnées les optimisations des différents volumes concernés pour la réalisation d'un guide multicoeurs de très haute précision et de très faibles dimensions conforme à l'invention,
- la figure 3 est une vue schématique d'une section transversale d'un assemblage de quatre préformes élémentaires destinées à produire un guide à 4 coeurs de très haute précision et de très faibles dimensions conforme à l'invention,
- la figure 4 est une vue schématique représentant l'opération d'usinage d'un méplat de grande précision sur les quatre préformes élémentaires destinées à produire un guide à quatre coeurs de très haute précision et de très faibles dimensions conforme à l'invention,
- la figure 5 représente schématiquement un assemblage de quatre préformes élémentaires munies d'une amorce d'étirage soudée sur cette assemblage de préformes,
- la figure 6 est une vue schématique d'une section transversale du guide optique multicoeurs de grande précision et de faibles dimensions conforme à l'invention, après étirage, ce guide étant revêtu d'un matériau polymère et muni d'un moyen de repérage,
- les figures 7 à 13 sont des vues schématiques de sections transversales de guides multicoeurs conformes à l'invention, et
- les figures 14A et 14B représentent schématiquement des guides conformes à l'invention où deux guides élémentaires adjacents sont dédiés respectivement au même sens de transmission de la lumière (fig.14A) et à des sens de transmission différents (fig.14B).

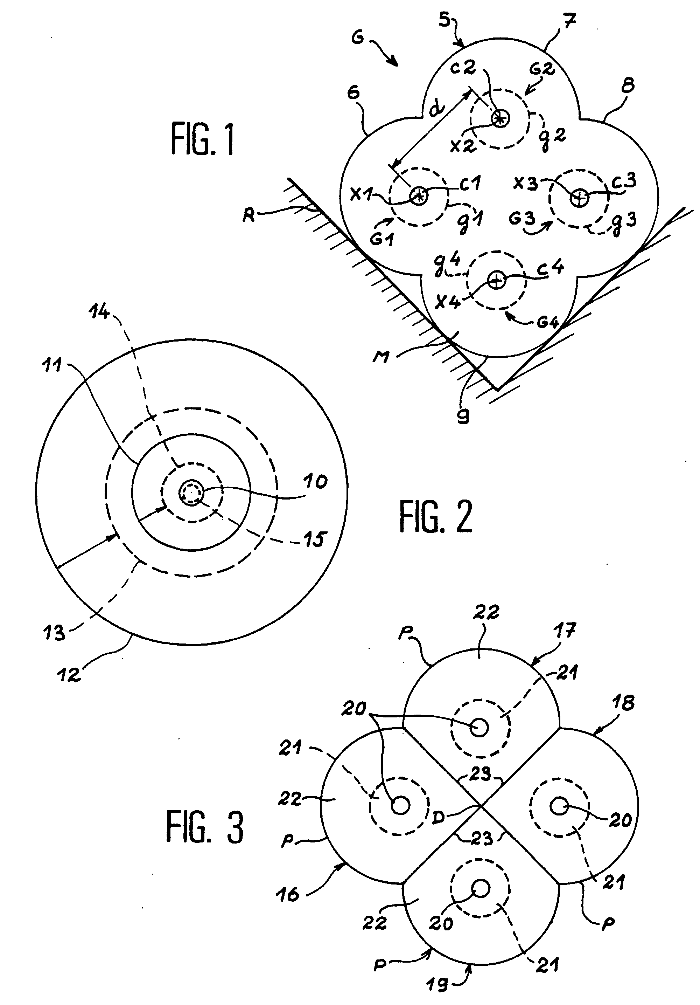

Sur la figure 1, on a représenté schématiquement un guide multicoeurs de grande précision et de très petites dimensions représentant un exemple du guide multicoeurs objet de la présente invention.

Le guide optique multicoeurs G représenté sur la figure 1 comprend n guides optiques élémentaires G1, G2, G3, G4 (n=4 dans l'exemple représenté) qui comportent respectivement quatre coeurs c1, c2, c3 et c4, ces coeurs étant respectivement entourés de gaines optiques g1, g2, g3 et g4.

Les axes des coeurs c1, c2, c3 et c4, qui portent respectivement les références X1, X2, X3 et X4 sont parallèles et constituent aussi les axes des guides élémentaires.

Le guide multicoeurs G comprend également une matrice M dans laquelle se trouvent les guides élémentaires.

Dans l'exemple représenté, les axes X1, X2, X3, X4 forment, en coupe transversale, les sommets d'un carré et les contours 6, 7, 8 et 9 de la matrice M, qui constituent aussi les contours du guide multicoeurs G, sont respectivement associés aux guides élémentaires et forment quatre portions identiques de cylindres de révolution dont les axes coïncident respectivement avec les axes X1, X2, X3 et X4.

Les coeurs c1, c2, c3 et c4 sont situés les uns par rapport aux autres à des distances connues et précises, précision qui est donnée par le procédé de fabrication objet de la présente invention.

A titre d'exemple, les coeurs sont disposés, les uns par rapport aux autres, à des distances qui sont connues avec une précision de l'ordre de 1/10è de micromètre ou de quelques dixièmes de micromètres, cet écart provenant de la qualité de l'opération d'étirage entre la préforme de base et la réalisation du guide optique multicoeurs de très petite dimensions.

A titre d'exemple, un tel guide multicoeurs a des distances d entre coeurs de l'ordre de 50 µm.

Ces coeurs sont situés de façon très précise par rapport au référentiel 5 du guide multicoeurs, qui est formé des portions de cylindre 6, 7, 8, 9.

Le rayon de ces cylindres est précis (précision de quelques dixièmes de micromètres), les coeurs étant parfaitement "centrés" sur les axes respectifs de ces cylindres.

Les dimensions hors tout d'un tel guide optique G sont précises à quelques dixièmes de micromètres près, garantissant avec le centrage des coeurs par rapport aux cylindres élémentaires un positionnement très précis du coeur par rapport au référentiel 5 qui constitue la surface extérieure du guide.

A titre d'exemple un tel guide optique à 4 coeurs a des dimensions hors tout de l'ordre de 125 µm.

On voit ainsi que la matrice M du guide G peut être simplement appliquée sur un référentiel R constitué de deux surfaces perpendiculaires par exemple pour que les coeurs soient parfaitement repérés dans l'espace et pour que ces coeurs puissent donc être placés soit en vis-à-vis d'un autre guide multicoeurs semblable pour un raccordement rapide, efficace et économique des deux guides multicoeurs ou soit en vis-à-vis d'un ensemble d'éléments optoélectroniques tels que diodes électroluminescentes, diodes lasers ou photodiodes, en vue d'un couplage des guides élémentaires à ces éléments.

Il s'agit donc là, compte tenu des très faibles dimensions et du repérage simple allié à la grande précision de positionnement des guides élémentaires, d'un guide multicoeurs extrêmement économique qui permet de réaliser des câbles optiques extrêmement denses et donc très économiques, des raccordements très économiques et des coûts de pose et de génie civil considérablement réduits.

Sur la figure 2, on a représenté en traits pleins les proportions d'une préforme permettant de réaliser une fibre monomode standard.

On a indiqué par des flèches et des pointillés les transformations apportées à la préforme et permettant de réaliser le guide multicoeurs.

Dans la préforme standard on voit que pour un coeur 10 de rayon (a) la partie déposée de silice de très bonne qualité formant la gaine optique 11 a un rayon de (5a) à (6a) et la surface extérieure 12 de la préforme un rayon d'environ (15a).

Ces caractéristiques, auxquelles il faut ajouter des données telles qu'une différence d'indice optique entre le coeur et la gaine d'environ 5x10⁻³, offrent aux fibres issues de telles préformes des caractéristiques excellentes en atténuation tant à 1,3 µm qu'à 1,55 µm, caractéristiques proches de l'atténuation ultime due à la diffusion de Rayleigh, et un bon comportement des fibres aux phénomènes de microcourbure et de courbure, ce qui les rend très faciles à câbler et leur permet de conserver les atténuations intrinsèques après installation.

Chaque préforme primaire qui est réalisée lors de la première étape du procédé objet de l'invention, a des caractéristiques qui sont sensiblement modifiées afin d'optimiser la réalisation du guide multicoeurs du point de vue de la densification et du coût.

Les principales optimisations portent ainsi sur les points suivants :
1) La réduction du diamètre extérieur ou diamètre de la surface extérieure 12, afin de l'amener au strict minimum 13 compatible avec le comportement global du guide multicoeurs aux phénomènes de courbure et de microcourbure.

A titre d'exemple, pour un guide de 4 coeurs, on peut réduire le diamètre extérieur jusqu'à des proportions de (7a) à (8a).

Cette réduction de proportions du diamètre extérieur entraîne une économie très conséquente puisqu'on réalise ainsi un guide monomode et non plus une fibre monomode avec quatre fois moins de matière.

Autrement dit, pour une préforme de taille équivalente à une préforme classique, la productivité ayant pour résultante la fabrication d'un guide monomode est multipliée par quatre.
2) La réduction du diamètre de gaine 11 afin de l'optimiser à son strict minimum 14 compatible avec le diamètre de coeur et sa différence d'indice optique, et compatible bien entendu avec la qualité du matériau formant la partie extérieure de la préforme.

Les progrès réalisés dans ce domaine ont montré qu'avec l'utilisation, pour la partie extérieure, d'une silice synthétique de qualité correcte (à titre d'exemple, une silice dont l'atténuation ne dépasse pas quelques décibels/km à 1,5 µm ou qui ne contient pas trop d'ions OH⁻⁾, il est possible d'obtenir de faibles atténuations pour le guide monomode, typiquement inférieures à 0,4 dB/km à 1,3 µm et à 0,3 dB/km à 1,55 µm, pour un rayon de gaine déposée aux environs de (3a).

Cette réduction de la gaine déposée a pour conséquence directe un abaissement du coût car la matière déposée pour réaliser le coeur et la gaine optique est très pure et relativement coûteuse et parce que, grâce à cette réduction de volume, il est, selon le procédé de dépôt utilisé, possible de fabriquer des préformes de plus grande capacité, donc plus économiques.
3) L'optimisation du coeur 10 du guide tant pour la matière (passage à un coeur 15 de diamètre inférieur) que pour la différence d'indice optique avec la gaine optique.

En effet, la réduction du diamètre extérieur, même en tenant compte de "l'insertion" du guide dans un guide multicoeurs, a pour conséquence d'accroître la sensibilité du guide aux phénomènes de courbure et de microcourbure et il est donc souhaitable, pour la réalisation de guides multicoeurs, d'optimiser le guide en augmentant la différence d'indice optique et en réduisant le diamètre de coeur.

Ceci a pour effet d'accroître très légèrement l'atténuation intrinsèque du guide à cause de l'incorporation supplémentaire du dopant, mais cette valeur d'atténuation à quelques centièmes de dB/km n'est en rien pénalisante pour l'application recherchée et présente le double avantage de réduire très nettement la sensibilité du guide aux microcourbures et courbures tout en diminuant la quantité de matière déposée, puisque le rapport rayon de gaine/rayon de coeur reste d'environ 3, et en offrant des perspectives de densification pour la réalisation des guides multicoeurs.

A titre d'exemple, une fibre classique monomode à dispersion nulle à 1,3 µm a un coeur d'environ 8,2 µm avec une différence d'indice gaine-coeur d'environ 5x10⁻³, ces valeurs n'étant bien entendu données qu'à titre indicatif, l'optimisation se faisant précisément en fonction du guide multicoeurs désiré.
4) Enfin, dans le cadre du procédé de réalisation de guides multicoeurs objet de l'invention, chaque préforme élémentaire a des caractéristiques géométriques extrêmement précises, ce qui signifie un dépôt régulier conduisant à un coeur 15 régulier et précis, à une gaine 14 régulière et précise et à un diamètre extérieur 13 de dimension nominale connue et précise par exemple au 1/100 mm près, pour des préformes élémentaires de 10 à 30 mm.

Bien entendu, pour des raisons de productivité, les préformes élémentaires précises destinées à réaliser le guide multicoeurs peuvent être étirées à partir de préformes de très gros diamètre ayant la capacité de produire des guides monomodes de plusieurs centaines de kilomètres.

Sur la figure 3 on a représenté schématiquement un assemblage de 4 préformes élémentaires 16, 17, 18, 19 destiné à produire un guide à 4 coeurs de très grande précision et de très faibles dimensions.

Chaque préforme élémentaire 16, 17, 18, 19 est constituée d'un coeur 20 et d'une gaine optique 21, assurant la qualité du guide optique, et d'une gaine extérieur 22 constituée d'une silice moins pure que la partie constituée par le coeur et la gaine optique, mais de qualité suffisante pour permettre l'optimisation du diamètre de gaine optique 21, par exemple pour le ramener à un rapport trois entre le diamètre de gaine optique et le diamètre de coeur optique.

L'ensemble des quatre gaines extérieures 22 conduit, après l'étirage de l'assemblage représenté sur la figure 3, à la matrice M représentée sur la figure 1.

Les dimensions de chaque préforme élémentaire sont extrêmement précises et, en particulier, le diamètre nominal extérieur de chaque préforme élémentaire est connu avec précision et sa tolérance est très faible, notamment inférieure au 1/100 de mm pour une préforme de 30 mm de diamètre par exemple.

Le rapport du diamètre extérieur au diamètre de coeur est réduit par rapport à une préforme destinée à fournir une fibre monomode classique et ce afin d'optimiser les dimensions finales du guide multicoeurs objet de l'invention.

Dans le procédé de fabrication objet de l'invention et comme le montre la figure 3, les préformes élémentaires sont usinées pour réaliser sur chacune d'entre elles deux méplats 23 nécessaires à la réalisation du guide optique à 4 coeurs.

Ces deux méplats 23 sont identiques et sont parallèles à l'axe de la préforme élémentaire correspondante (axe du coeur de cette préforme) et ils sont de plus perpendiculaires l'un à l'autre, ont une droite commune dont la trace porte la référence D sur la figure 3 et délimitent une portion P de cylindre de révolution autour de l'axe de la préforme élémentaire correspondante, de manière que celle-ci admette comme plan de symétrie le plan contenant cet axe et la droite commune D.

L'assemblage des 4 préformes usinées, qui est représenté sur la figure 3, conduit, après l'étirage dont il sera question plus loins, au guide G de la figure 1.

Dans le cas d'un guide à deux coeurs, un seul méplat est réalisé sur chaque préforme élémentaire avant assemblage.

Ainsi, selon le mode d'assemblage désiré pour les préformes élémentaires afin de constituer le guide multicoeurs de grande précision, on réalise par usinage des méplats à des côtes extrêmement précises par rapport au cylindre extérieur de référence de chaque préforme élémentaire et donc au coeur de chaque préforme élémentaire, ce coeur étant parfaitement centré dans la préforme élémentaire qui lui correspond.

La côte de ces méplats est parfaitement prédéterminée pour former l'assemblage voulu et elle détermine bien entendu la distance entre les coeurs 20 dans cet assemblage, distance qui sera déterminante dans la réalisation du guide multicoeurs à la fois pour la précision géométrique des guides élémentaires par rapport aux références des diamètres extérieurs et pour les caractéristiques des guides en ce qui concerne la diaphotie ("cross-talk"), c'est-à-dire la possibilité de couplage d'énergie d'un guide optique élémentaire vers l'autre.

On voit donc à nouveau que l'objectif consistant à minimiser la diaphotie des guides élémentaires tout en conservant de très faibles dimensions conduit à une optimisation de l'ensemble des paramètres des préformes élémentaires 16, 17, 18, 19 et en particulier à l'optimisation du rapport diamètre extérieur/diamètre de coeur, du rapport diamètre de gaine optique/diamètre de coeur, du diamètre de coeur, de la différence d'indice optique entre coeur et gaine optique.

En effet le phénomène de diaphotie entre les guides élémentaires est lié directement, entre autres, au rapport de la distance entre les coeurs et du rayon des coeurs.

A titre d'exemple ce rapport, au delà de 12, n'induit que de très faibles pertes de diaphotie qui deviennent parfaitement acceptables pour la réalisation de liaisons de télécommunications.

L'optimisation consiste donc, si l'on veut obtenir la densité maximale du point de vue des coeurs, à réduire le diamètre de coeur pour obtenir un rapport suffisant, ou à augmenter, si cette réduction de diamètre de coeur devient difficile, la distance entre les coeurs pour respecter de faibles pertes en diaphotie.

A titre d'exemple, un guide optimisé avec un diamètre de 7 µm conduit à une distance minimale de 42 µm entre les coeurs du guide multicoeurs objet de l'invention.

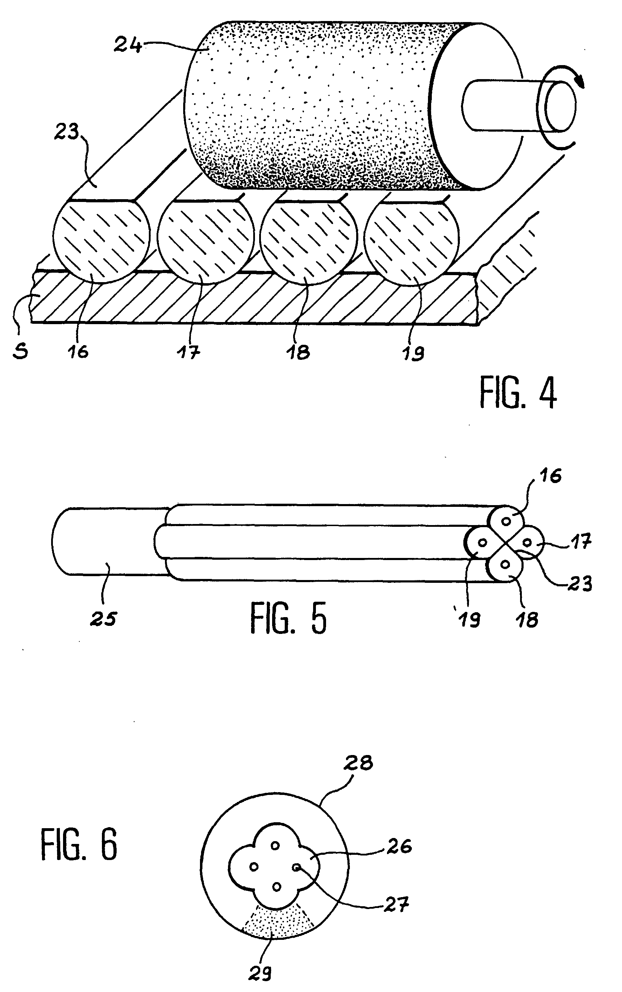

Sur la figure 4, on a représenté schématiquement l'opération d'usinage des 4 préformes élémentaires 16, 17, 18, 19 montées sur un support approprié S, afin de réaliser les méplats.

On réalise facilement par un meulage (au moyen d'une meule 24), suivi d'une opération de "douci", à la fois une surface d'une excellente planéité et possèdant un très bon état de surface, la silice se prêtant extrêmement bien à ces opérations d'usinage qui peuvent être automatisées et globalisées pour un grand nombre de préformes élémentaires et être ainsi très peu coûteuses lorsqu'on rapporte le coût d'une telle opération au nombre de kilomètres de guides monomodes produits par un procédé de fabrication conforme à l'invention.

Cet usinage de grande précision permet de réaliser des préformes élémentaires cylindriques munies de méplats 23 situés de façon très précise par rapport aux centres des coeurs.

Ces opérations d'usinage permettent donc ensuite d'obtenir un assemblage de n préformes élémentaires comme le montre la figure 3 où n vaut 4, avec une excellente géométrie globalement définie à moins de 1/100 mm près par exemple, tant pour la côte des diamètres extérieurs des préformes que pour la précision des méplats par rapport aux centres des préformes.

Sur la figure 5, on a représenté l'assemblage des préformes élémentaires 16, 17, 18, 19 après réalisation de leurs méplats 23 et soudure d'une partie-amorce 25 en silice qui a deux rôles essentiels, à savoir d'une part lier les n préformes élémentaires (ici, dans l'exemple donné à titre indicatif, 4 préformes) après les avoir pressées les unes contre les autres et d'autre part servir d'amorce au moment de l'étirage, afin de minimiser les pertes d'amorçage pour la préforme à n guides d'ondes avec une fusion qui se propage le long de l'assemblage pendant l'opération d'étirage.

L'étirage de la préforme (assemblage de la figure 5) destinée à donner un guide à n coeurs se fait avec les moyens traditionnels d'étirage conduisant à des fibres optiques de grande précision.

Sur la figure 6, on a représenté schématiquement une coupe transversale du guide optique 26 à quatre coeurs 27 de grande précision et de très faibles dimensions, obtenu par un procédé de fabrication conforme à l'invention, après usinage des préformes élémentaires, assemblage, présoudure et étirage de très grande précision.

L'étirage se fait selon une technique parfaitement connue pour les fibres optiques, étirage dont on sait que la très grande précision est obtenue d'autant plus facilement que la préforme à étirer est elle même extrêmement précise et régulière.

Le procédé de fabrication objet de l'invention conduit à un assemblage de préformes élémentaires usinées de très grande précision et la précision du guide optique multicoeurs objet de l'invention est donc très liée à la grande précision de l'étirage.

En effet, l'assemblage conduit globalement à une précision des côtes hors tout de l'ordre de 1 à 2/100 de mm ce qui, à l'échelle de la transformation due à l'étirage qui fait passer d'un assemblage de préformes de 40 à 60 mm de dimension à un guide multicoeurs de 120 à 150 µm, conduit à une précision intrinsèque sur la position des guides qui est inférieure à 0,1 µm.

La qualité du fibrage traditionnel reconnue à ± 2 µm peut être portée, dans le cas de préformes très régulières et très précises, à ± 0,5 µm.

C'est donc avec cette conjonction d'une préforme extrêmement régulière et d'un fibrage très précis qu'on peut atteindre une précision de l'ordre de 0,5 µm sur le positionnement du guide, ce qui conduit à un guide multicoeurs très précis ayant les caractéristiques requises pour un repérage aisé et par exemple un raccordement de deux guides optiques multicoeurs qui est simple, peu coûteux et suffisamment efficace dans le cadre d'une utilisation de tels guides pour des réseaux d'abonnés ou des réseaux s'étendant sur de courtes distances.

Lors de l'étirage, le guide optique multicoeurs est revêtu d'un revêtement protecteur 28 en plastique de quelques dizaines de micromètres d'épaisseur, typiquement 30 à 50 µm et, afin de faciliter le repérage des guides élémentaires 27 dans la matrice 26, un côté de cette matrice est muni d'un moyen de repérage incorporé au revêtement 28.

Dans un exemple de réalisation, ce repérage est réalisé par une simple injection directive d'une résine colorée 29 équivalente par ailleurs à la résine constituant le revêtement 28.

Ainsi, le simple fait de repérer la partie colorée donne la position de la matrice dans l'espace.

La présente invention définit donc un guide multicoeurs (ces coeurs étant de préférence monomodes), ce guide ayant une grande précision et de très petites dimensions.

Dans ce guide multicoeurs, les guides élémentaires sont à des distances connues et très précises les uns des autres et ils sont aussi très précisément repérés par rapport à un référentiel constitué par la surface extérieure du guide multicoeurs, ce qui permet un centrage aisé de ce guide dans un référentiel simple afin d'assurer soit un couplage guide à guide qui est simple, efficace et peu coûteux soit un alignement automatiquement devant un ensemble de composants optoélectroniques d'émission ou de détection.

Selon le procédé de fabrication objet de l'invention, des préformes élémentaires de très grande précision sont fabriquées avec des paramètres optogéométriques adaptés à la constitution du guide multicoeurs.

Ces préformes élémentaires très précises sont alors usinées pour obtenir des méplats avec une très grande précision permettant un assemblage des préformes pour former une matrice de grande précision qui, une fois présoudée avec une amorce d'étirage, sera étirée pour obtenir un guide multicoeurs de très grande précision.

L'optimisation des paramètres optogéométriques de chaque guide élémentaire conduit ainsi à une réduction considérable du coût de ce guide élémentaire (de préférence monomode).

La notion connue de fibre optique monomode est ici remplacée par la notion de guide élémentaire monomode.

Le procédé objet de l'invention est extrêmement économique puisque l'opération d'usinage très classique peut être globalisée et automatisée tout en étant rapide et précise tant la silice se prête bien à ces opérations.

On obtient ainsi un guide à n coeurs, n pouvant aller de 2 à au moins 7 (6 coeurs au sommet d'un hexagone et un coeur au centre de cet hexagone lorsque le guide est vu en coupe transversale), en gardant pour le guide des dimensions très réduites, ce qui signifie une densification considérable des câbles à fibres optiques actuels et donc une réduction très sensible des coûts non seulement pour le câble mais encore pour la pose, le génie civil et l'installation, avec notamment une possibilité de raccordement guide à guide qui globalise les phases coûteuses et pénalisantes traditionnelles de dénudage de la fibre, de fracture, de nettoyage et d'alignement.

Cette invention représente donc une voie nouvelle pour les réseaux d'abonnés notamment dans le domaine des télécommunications, où les difficultés actuelles d'utilisation des fibres monomodes conduisent à partager une fibre monomode entre n abonnés pour faire des économies, ce qui nécessite de compliquer les moyens électroniques associés, de disposer de composants performants, d'ajouter éventuellement des dispositifs comme les amplificateurs optiques, de disposer de coupleurs optiques 1 vers n relativement coûteux à utiliser, ce qui constitue une approche qui peut paraître un peu "contre nature" pour l'avenir d'une interactivité complète.

L'invention introduit donc l'usage de guides monomodes pour abonnés, soit un guide avec usage d'un composant simple pour liaison full-duplex, soit n guides, ce qui introduit en quelque sorte la notion d'un guide monomode par usage, le guide monomode étant, grâce à l'invention, extrêmement peu coûteux tant en réalisation qu'en mise en oeuvre sur le réseau.

Cette approche implique, à l'inverse de l'approche du partage, une recherche technologique de composants optoélectroniques intégrés peu coûteux, adaptables à l'évolution des besoins et utilisant un guide monomode conforme à l'invention.

On revient, dans ce qui suit, sur la mise en oeuvre de l'invention.

De préférence, pour obtenir un guide multicoeur de faibles dimensions, conforme à l'invention, le rapport du diamètre de la gaine optique au diamètre du coeur de chaque guide optique élémentaire de ce guide multicoeurs est de l'ordre de 3.

Pour ce faire, le rapport du diamètre de la gaine optique au diamètre du coeur de chaque préforme élémentaire servant à la fabrication du guide multicoeurs est de l'ordre de 3.

De préférence également, en vue d'une compatibilité de ce guide multicoeurs avec les normes actuellement en vigueur, la matrice dans laquelle se trouvent les guides optiques élémentaires est en outre inscriptible dans un cylindre dont le diamètre vaut 125 µm.

Le diamètre externe de chaque préforme élémentaire est alors choisi de façon appropriée (pour que l'étirage de l'assemblage des préformes élémentaires conduise à un guide inscriptible dans ce cylindre).

Diverses optimisations sont possibles pour les guides multicoeurs conformes à l'invention, par exemple :
- une optimisation par un choix des caractéristiques opto-géométriques des guides optiques élémentaires (ces caractéristiques étant le diamètre du coeur de chaque guide élémentaire et la différence d'indice optique entre ce coeur et la gaine optique qui l'entoure), ces caractéristiques étant différentes pour deux guides élémentaires adjacents ; cette différenciation permet de rapprocher très fortement ces guides l'un de l'autre, tout en gardant une diaphotie parfaitement acceptable (par exemple 50 dB) à la longueur d'onde de la lumière qui se propage dans les guides élémentaires (par exemple 1,3 µm),
- une optimisation en supposant que deux guides élémentaires adjacents, suffisamment isolés optiquement l'un de l'autre, sont dédiés à deux sens de transmission différents de la lumière, la distance à prendre en compte pour la diaphotie devenant alors le double de la distance de deux guides adjacents.

Ainsi, selon un mode de réalisation particulier de l'invention, chaque guide optique élémentaire a des caractéristiques opto-géométriques différentes de celles des guides optiques élémentaires qui en sont les plus proches, ces caractéristiques étant choisies de façon à obtenir une faible diaphotie entre les guides optiques élémentaires lorsque ceux-ci sont parcourus dans le même sens par une lumière de longueur d'onde déterminée.

Et, selon un autre mode de réalisation particulier complémentaire du précédent, les guides optiques élémentaires étant optimisés par leurs caractéristiques optogéométriques pour atteindre une diaphotie acceptable (par exemple 50 dB) entre guides adjacents, l'utilisation, dans deux sens de transmission différents, de deux guides adjacents permet de réduire encore leur distance.

Bien entendu, pour chacun de ces modes de réalisation particulier, les paramètres, d'un guide multicoeurs étant définis, l'homme du métier est capable de définir, notamment par des considérations d'homothétie, les paramètres des préformes élémentaires permettant d'obtenir un tel guide.

On peut aussi envisager une optimisation d'un guide multicoeurs conforme à l'invention en supposant que deux guides élémentaires adjacents sont affectés à des lumières de longueurs d'onde différentes.

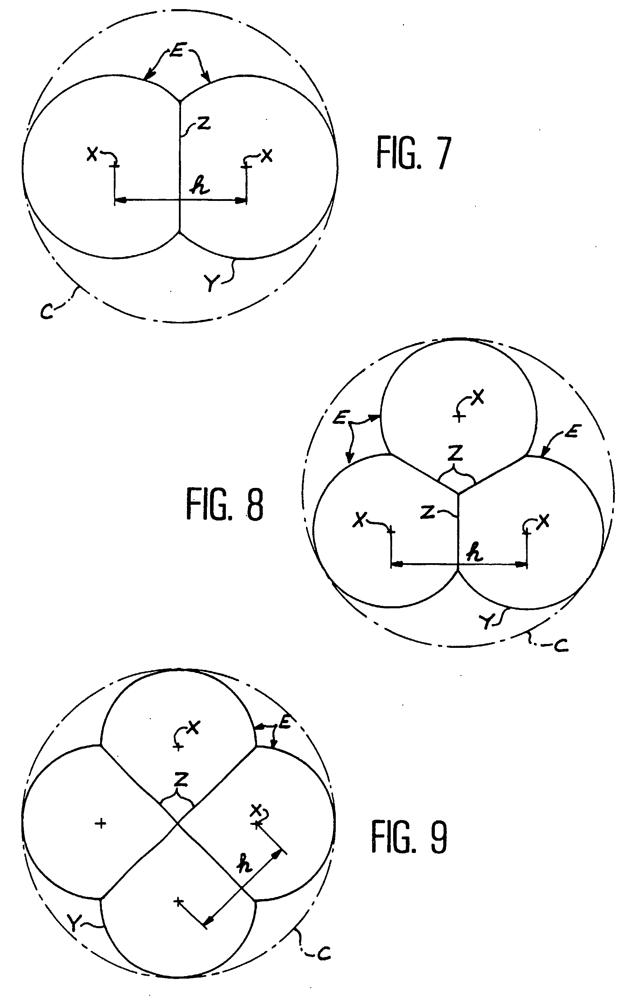

Les figures 7 à 13 sont des vues en coupe transversale schématiques de guides multicoeurs monomodes conformes à l'invention.

Sur ces figures les gaines optiques des guides optique élémentaires ne sont pas représentées : on a simplement repéré l'axe X de chaque guide optique élémentaire, le contour Y de chaque guide multicoeurs et le cylindre C dans lequel est inscrit ce guide multicoeurs.

On a également représenté le ou les méplats fictifs Z correspondant aux méplats qui ont été formés sur les préformes élémentaires (correspondant aux guides élémentaires) en vue de l'assemblage qui conduit, après étirage, au guide multicoeurs.

Chaque guide élémentaire a, par exemple, un coeur de 8 µm de diamètre et une gaine optique de 24 µm de diamètre.

Chaque cylindre C a, dans les exemples des figures 7 à 13, un diamètre de 125 µm.

Ainsi, pour chaque guide multicoeurs représenté, connaissant les contours respectifs des préformes élémentaires dont l'assemblage conduit, après étirage, à ce guide multicoeurs (les "contours" E homothétiques des précédents et associés aux guides élémentaires correspondant à ces préformes apparaissant sur les figures 7 à 13), on peut déterminer les paramètres géométriques de ces guides élémentaires (rayon r, distance(s) notée(s) h, h_{c}, h_{d} entre axes de coeurs de guides élémentaires voisins) et déterminer, par des considérations d'homothétie, les paramètres géométriques des préformes élémentaires.

La figure 7 montre un guide multicoeurs à deux coeurs (on parle de "configuration à 2 coeurs"). On choisit une distance h entre les deux coeurs par exemple de 50 µm.

La figure 8 montre une configuration à 3 coeurs, dont les axes définissent un triangle équilatéral sur la figure, dont le côté h vaut 54,13 µm.

La figure 9 montre une configuration à 4 coeurs, dont les axes définissent un carré de côté h=44,19 µm, cette valeur étant compatible avec un profil de guide monomode (il en est de même pour les configurations à 2 ou 3 coeurs).

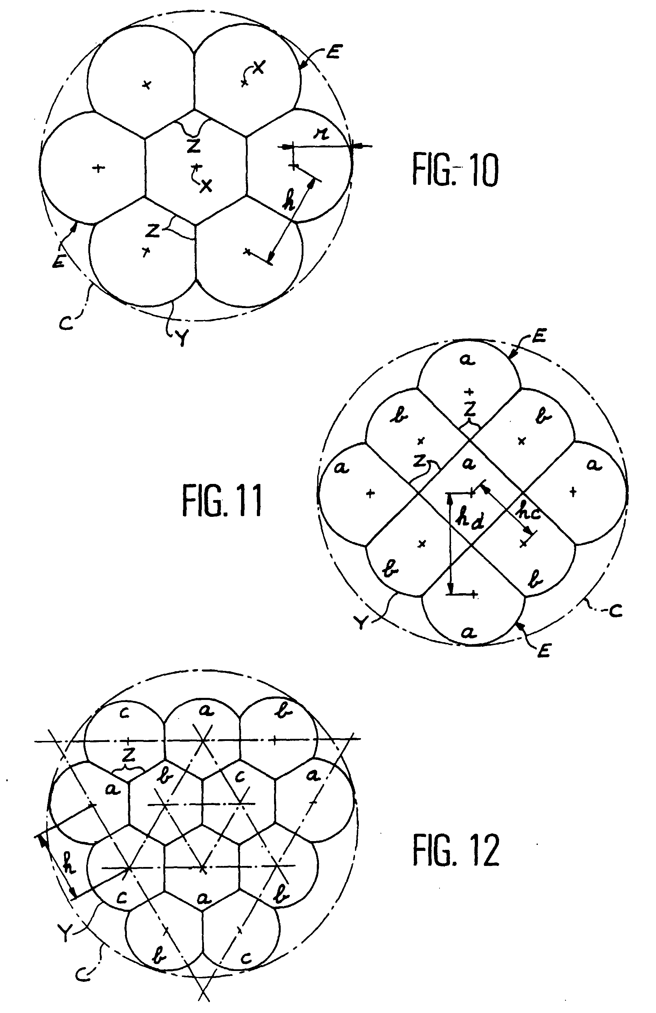

La figure 10 représente une configuration à 7 coeurs, dont le guide élémentaire central correspond à une préforme élémentaire à contour hexagonal. On obtient, pour chacun des 6 guides élémentaires entourant le guide élémentaire central, un contour comportant une portion cylindrique de rayons r=22,866 µm, d'où une distance h entre deux coeurs de 39,623 µm.

La figure 11 représente une configuration à 9 coeurs, le pas h_{c} de cette configuration (plus courte distance entre les coeurs) valant 29,46 µm tandis que la distance h_{d} du coeur central aux coeurs qui en sont les plus éloignés vaut 41,67 µm. Pour avoir une faible diaphotie, on utilise deux types de caractéristiques opto-géométriques (notées a et b) pour les guides élémentaires et l'on change de type en passant d'un guide élémentaire à l'un de ses plus proches voisins (qui en est situé à la distance h_{c}). Les avantages de cette configuration à 9 coeurs sont que les coeurs forment (en coupe transversale) une matrice carrée et qu'il suffit de deux types a et b de caractéristiques opto-géométriques pour avoir une faible diaphotie.

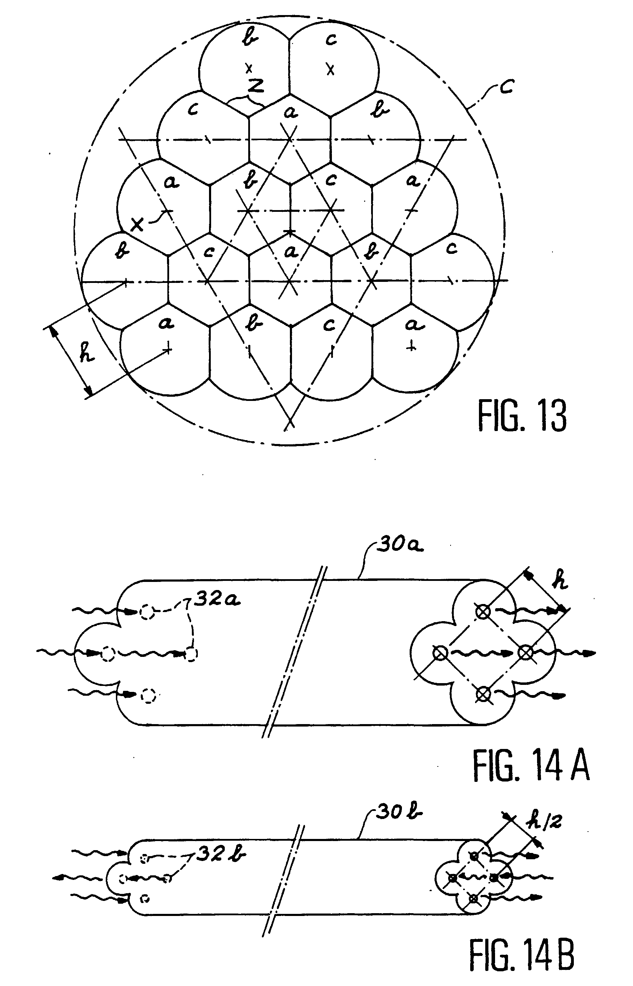

La figure 12 représente une configuration à 12 coeurs, formant un réseau hexagonal où les coeurs sont situés aux sommets de triangles équilatéraux de côté h de l'ordre de 30 µm. On obtient ainsi un meilleur taux de remplissage du cercle C qu'avec la configuration à 9 coeurs. Pour obtenir une faible diaphotie, on peut utiliser trois types, notés a, b, c, de caractéristiques opto-géométriques pour les guides élémentaires, caractéristiques que l'on fait alterner en passant d'un guide élémentaire à l'autre comme on le voit sur la figure 12.

La figure 13 représente une configuration à 18 coeurs, où les coeurs sont encore situés aux sommets de triangles équilatéraux dont le côté h vaut, ici, environ 23 µm. En vue d'obtenir une faible diaphonie, on utilise encore trois types, notés a, b, c de caractéristiques opto-géométriques pour les guides élémentaires, caractéristiques que l'on fait alterner en passant d'un guide élémentaire à l'autre comme on le voit sur la figure 13.

Les figures 14A et 14B illustrent schématiquement la possibilité de réduire les dimensions d'un guide multicoeurs conforme à l'invention, en conservant la même diaphotie, à condition de choisir des sens de propagation appropriés pour la lumière dans les guides élémentaires du guide multicoeurs : la figure 14A montre un guide multicoeurs 30a où tous les guides élémentaires 32a, qui sont distants de h les uns des autres, sont traversés dans le même sens par cette lumière. La figure 14B montre un autre guide multicoeurs 30b où tous les guides élémentaires 32b sont distants de h/2 les uns des autres et qui conduit à la même diaphotie que le guide de la figure 14A, à condition que deux guides adjacents soient parcourus par la lumière en sens contraires.

## Revendications

1. Guide optique multicoeurs comprenant :
- une pluralité de guides optiques élémentaires (G1 à G4) dont les axes (X1 à X4; X) sont parallèles et qui comprennent chacun un coeur (c1 à c4) et une gaine optique (g1 à g4) qui entoure ce coeur, et
- une matrice (M) dans laquelle se trouvent ces guides optiques élémentaires, **caractérisé en ce que** ladite matrice est délimitée par des portions adjacentes de cylindres et en ce que les guides optiques élémentaires (G1 à G4) sont placés en des positions définies à quelques dixièmes de micromètre près, les uns par rapport aux autres dans la matrice (M) et par rapport aux contours extérieurs (6, 7, 8, 9) de celle-ci, le diamètre de coeur et le diamètre de gaine optique de ces guides élémentaires étant définis à quelques dixièmes de micromètre près et l'excentrement entre ce coeur et cette gaine étant de l'ordre du dixième de micromètre, et en ce que chaque guide optique élémentaire a des caractéristiques optogéométriques, à savoir le diamètre du coeur de ce guide optique élémentaire et la différence entre l'indice optique de ce coeur et celui de la gaine optique de ce guide optique élémentaire, différentes de celles des guides optiques élémentaires qui en sont les plus proches, ces caractéristiques étant choisies de façon à obtenir une faible diaphotie entre les guides optiques élémentaires lorsque ceux-ci sont parcourus dans le même sens par une lumière de longueur d'onde déterminée.

2. Guide optique selon la revendication 1,
**caractérisé en ce qu'**il comprend quatre guides optiques élémentaires (G1 à G4) dont les axes (X1 à X4) forment, en coupe transversale, les sommets d'un carré, et en ce que les contours de la matrice forment quatre portions identiques de cylindres de révolution (6, 7, 8, 9) dont les axes coïncident respectivement avec les axes des guides optiques élémentaires.

3. Guide optique selon l'une quelconque des revendications 1 et 2, **caractérisé en ce que** chaque guide optique élémentaire est monomode.

4. Guide optique selon l'une quelconque des revendications 1 à 3, **caractérisé en ce que**, pour chaque guide optique élémentaire, le rapport du diamètre de la gaine optique au diamètre du coeur est de l'ordre de 3.

5. Guide optique selon la revendication 4, **caractérisé en ce que** la matrice dans laquelle se trouvent les guides optiques élémentaires est en outre inscriptible dans un cylindre dont le diamètre est de l'ordre de 125 µm.

6. Procédé de fabrication du guide optique multicoeurs selon la revendication 1, ce procédé étant **caractérisé en ce qu'**il comprend les étapes successives suivantes :
- on fabrique une pluralité de préformes élémentaires (16, 17, 18, 19) dont la précision est compatible avec celle qui est désirée pour le guide multicoeurs,
- on usine ces préformes élémentaires comprenant un guide optique élémentaire avec précision et de manière à obtenir, après assemblage de ces préformes, le modèle géométrique choisi pour le guide optique multicoeurs, correspond à un contour delimité par des portions de cylindre
- on assemble les préformes élémentaires (16, 17, 18, 19) ainsi usinées suivant ce modèle géométrique choisi,
- on soude partiellement les préformes élémentaires usinées et ainsi assemblées, au moyen d'une amorce d'étirage (25), et
- on réalise un étirage de précision de l'assemblage des préformes élémentaires muni de l'amorce d'étirage afin d'obtenir le guide optique multicoeurs.

7. Procédé selon la revendication 6, **caractérisé en ce que** chaque préforme élémentaire (16, 17, 18, 19) est fabriquée selon un procédé comprenant les étapes successives suivantes :
- on fabrique un barreau creux de silice à paroi épaisse et de grande précision géométrique,
- on réalise, à l'aide d'un four, un dépôt interne en phase vapeur d'un revêtement vitreux dans ce barreau, à l'aide d'un mélange de composés gazeux que l'on fait circuler dans le barreau, ces composés éant aptes à engendrer le revêtement par réaction entre eux, et
- on réalise un rétreint du barreau.

8. Procédé selon l'une quelconque des revendications 6 et 7, **caractérisé en ce que** l'usinage de chaque préforme élémentaire (16, 17, 18, 19) comprend la formation, sur celle-ci, d'un ou d'une pluralité de méplats (23) parallèlement à l'axe de cette préforme élémentaire, permettant l'assemblage des préformes élémentaires suivant le modèle géométrique choisi.

9. Procédé selon la revendication 8, **caractérisé en ce qu'**on fabrique quatre préformes élémentaires (16, 17, 18, 19), on forme sur chacune de celles-ci deux méplats (23) identiques et perpendiculaires, qui ont une droite commune (D) et qui délimitent une portion (P) de cylindre de révolution autour de l'axe de cette préforme élémentaire, de manière que celle-ci admette un plan de symétrie contenant l'axe de cette préforme élémentaire et la droite (D) commune aux deux méplats, et en ce qu'on assemble les quatre préformes élémentaires ainsi usinées, pour obtenir un ensemble dans lequel les quatre axes des préformes élémentaires occupent, en coupe transversale, les sommets d'un carré, et dont les contours forment quatre portions (P) de cylindre de révolution dont les axes coïncident respectivement avec les axes des préformes élémentaires.

10. Procédé selon l'une quelconque des revendications 6 à 9, **caractérisé en ce que** le rapport du diamètre de la gaine optique au diamètre du coeur de chaque préforme élémentaire est de l'ordre de 3.

11. Procédé selon la revendication 10, **caractérisé en ce que** le diamètre externe de chaque préforme élémentaire est en outre choisi de façon que le guide multicoeurs obtenu par étirage de l'assemblage des préformes élémentaires soit inscriptible dans un cylindre dont le diamètre vaut 125 µm.

12. Procédé selon l'une quelconque des revendications 6 à 11, **caractérisé en ce que** l'assemblage est muni d'un revêtement protecteur (28) lors de son étirage.

13. Procédé selon la revendication 12, **caractérisé en ce que** ce revêtement protecteur (28) est en outre muni d'un moyen de repérage (29) des guides optiques élémentaires (27) du guide multicoeurs formé.

## Patentansprüche

1. Mehrkerniger bzw. mehradriger Lichtwellenleiter, mit:
mehreren elementaren optischen Leitern bzw. Lichtwellenleitern (G1 bis G4), deren Achsen (X1 bis X4; X) parallel sind und die jeweils einen Kern (c1 bis c4) sowie eine optische Hülle (g1 bis g4), die diesen Kern umgibt, aufweisen, und
einer Matrix (M), in der sich die elementaren Lichtwellenleiter befinden,
**dadurch gekennzeichnet, daß** die Matrix durch aneinandergrenzende Zylinderabschnitte begrenzt ist, und daß
die elementaren Lichtwellenleiter (G1 bis G4) in der Matrix (M) an Positionen in bezug aufeinander und in bezug auf die äußeren Konturen (6,7,8,9) derselben plaziert sind, die bis auf einige Zehntel Mikrometer genau festgelegt sind, wobei der Durchmesser des Kerns und der Durchmesser der optischen Hülle dieser elementaren Leiter bis auf einige Zehntel Mikrometer genau festgelegt sind und die Außermittigkeit zwischen dem Kern und der Hülle in der Größenordnung von ein Zehntel Mikrometer liegt, und daß
jeder elementare Lichtwellenleiter optogeometrische Eigenschaften, d.h. einen Durchmesser des Kerns des elementaren Lichtwellenleiters und eine Differenz zwischen dem optischen Index des Kerns und dem der optischen Hülle des elementaren Lichtwellenleiters, aufweist, die sich von denen der nächstgelegenen elementaren Lichtwellenleiter unterscheiden, wobei diese Eigenschaften derart gewählt werden, daß man eine geringfügige Diaphotie zwischen den elementaren Lichtwellenleitern erhält, wenn diese von Licht mit bestimmter Wellenlänge in der gleichen Richtung durchlaufen werden.

2. Lichtwellenleiter gemäß Anspruch 1, **dadurch gekennzeichnet, daß** er vier elementare Lichtwellenleiter (G1 bis G4) umfaßt, deren Achsen (X1 bis X4) im Querschnitt die Ecken eines Quadrats bilden, und daß die Konturen der Matrix vier identische Abschnitte von Drehzylindern (6,7,8,9) bilden, deren Achsen jeweils mit den Achsen der elementaren Lichtwellenleiter zusammenfallen.

3. Lichtwellenleiter gemäß einem der Ansprüche 1 oder 2, **dadurch gekennzeichnet, daß** jeder elementare Lichtwellenleiter ein Einmodenleiter ist.

4. Lichtwellenleiter gemäß einem der Ansprüche 1 bis 3, **dadurch gekennzeichnet, daß** für jeden elementaren Lichtwellenleiter das Verhältnis des Durchmessers der optischen Hülle zum Durchmesser des Kerns in etwa 3 beträgt.

5. Lichtwellenleiter gemäß Anspruch 4, **dadurch gekennzeichnet, daß** die Matrix, in der sich die elementaren Lichtwellenleiter befinden, außerdem einem Zylinder einbeschreibbar ist, dessen Durchmesser ca. 125 µm beträgt.

6. Herstellungsverfahren des Lichtwellenleiters mit mehreren Kernen gemäß Anspruch 1, **dadurch gekennzeichnet, daß** es die folgenden sukzessiven Schritte umfaßt:
Herstellung mehrerer elementarer Vorformteile bzw. Vorformelemente (16,17,18,19), deren Präzision mit der für den mehrkernigen Leiter erwünschten kompatibel ist,
maschinelle Bearbeitung der einen elementaren Lichtwellenleiter aufweisenden Vorformelemente mit Präzision und auf eine Art und Weise, daß das nach dem Zusammenbau dieser Vorformelemente für den mehrkernigen Lichtwellenleiter gewählte geometrische Modell, das einer Kontur entspricht, die von Zylinderabschnitten begrenzt ist, erhalten wird
Zusammenbau der so bearbeiteten Vorformelemente (16,17,18,19) nach diesem gewählten geometrischen Modell,
teilweises Verlöten bzw. Verschweißen der maschinell bearbeiteten und auf diese Weise zusammengebauten Vorformelemente mittels eines Streckformvorspanns (amorce d'etirage) (25), und
Durchführen eines Präzisions-Streckformvorgangs der Baugruppe von Vorformelementen, die mit dem Streckformvorspann versehen sind, um so den mehrkernigen Lichtwellenleiter zu erhalten.

7. Verfahren gemäß Anspruch 6, **dadurch gekennzeichnet, daß** jedes Vorformelement (16,17,18,19) gemäß einem Verfahren hergestellt wird, das die folgenden sukzessiven Schritte umfaßt:
Fertigung eines Hohlstabs aus Kieselerde bzw. Quarzglas mit dicker Wand und hoher geometrischer Präzision,
internes Aufdampfen, mit Hilfe eines Ofens, einer glasartigen Beschichtung in dem Stab mittels eines Gemischs gasförmiger Verbindungen, die man im Stab zirkulieren läßt, wobei die Verbindungen die Beschichtung durch Reaktion miteinander zu erzeugen vermögen, und
Ausführen einer Querschnittsverminderung des Stabs.

8. Verfahren gemäß einem der Ansprüche 6 oder 7, **dadurch gekennzeichnet, daß** die maschinelle Bearbeitung jedes Vorformelements (16,17,18,19) die Ausbildung einer oder mehrerer Abflachung(en) (23) auf dieser parallel zur Achse dieses Vorformelements umfaßt, was den Zusammenbau der Vorformelemente nach dem gewählten geometrischen Modell gestattet.

9. Verfahren gemäß Anspruch 8, **dadurch gekennzeichnet, daß** vier Vorformelemente (16,17,18,19) hergestellt werden und auf jeder davon zwei identische und zueinander senkrechte Abflachungen (23) ausgebildet werden, die eine gemeinsame Gerade (D) aufweisen und einen Abschnitt (P) eines Drehzylinders um die Achse dieser Vorformelemente derart begrenzen, daß dieser eine Symmetrieebene zuläßt, welche die Achse des Vorformelements und die den beiden Abflachungen gemeinsame Gerade (D) enthält, und daß die vier auf diese Weise maschinell bearbeiteten Vorformelemente zusammengebaut werden, um eine Einheit zu erhalten, in der die vier Achsen der Vorformelemente im Querschnitt an den Ecken eines Vierkants liegen, und deren Konturen vier Drehzylinder-Abschnitte (P) bilden, wobei die Achsen der Drehzylinder jeweils mit den Achsen der Vorformelemente zusammenfallen.

10. Verfahren gemäß einem der Ansprüche 6 bis 9, **dadurch gekennzeichnet, daß** das Verhältnis des Durchmessers der optischen Hülle zum Durchmesser des Kerns jedes Vorformelements ca. 3 beträgt.

11. Verfahren gemäß Anspruch 10, **dadurch gekennzeichnet, daß** der Außendurchmesser jedes Vorformelements außerdem so gewählt wird, daß der durch Streckformen der Anordnung der Vorformelemente erhaltene mehrkernige Leiter einem Zylinder einbeschreibbar ist, dessen Durchmesser 125 µm beträgt.

12. Verfahren gemäß einem der Ansprüche 6 bis 11, **dadurch gekennzeichnet, daß** die Anordnung während des Streckformens mit einer Schutzschicht (28) versehen wird.

13. Verfahren gemäß Anspruch 12, **dadurch gekennzeichnet, daß** die Schutzschicht (28) außerdem mit einem Markierungsmittel (29) für die elementaren Lichtwellenleiter (27) des ausgebildeten mehrkernigen Leiters versehen ist.

## Claims

1. Multicore optical guide comprising:
a plurality of elementary optical guides (G1 to G4), whose axes (X1 to X4; X) are parallel and which in each case have a core (c1 to c4) and an optical sheath (g1 to g4) surrounding said core and
a matrix (M) containing said elementary optical guides,
**characterized in that** said matrix is defined by adjacent portions of cylinders and in that the elementary optical guides (G1 to G4) are positioned at positions defined to within a few tenths of a micrometer with respect to one another in the matrix (M) and with respect to the outer contours (6, 7, 8, 9) thereof, the core diameter and the diameter of the optical sheath of said elementary guides being defined to within a few tenths of a micrometer and the offset between said core and said sheath being approximately 1/10 micrometer and in that each elementary optical guide has optogeometrical characteristics, namely the diameter of the core of said elementary optical guide and the difference between the optical index of the core is that of the optical sheath of said elementary optical guide and different from those of the elementary optical guides closest thereto, said characteristics being chosen in such a way as to obtain a limited crosstalk between the elementary optical guides when the latter are traversed in the same direction by light having a given wavelength.

2. Optical guide according to claim 1, **characterized in that** it comprises four elementary optical guides (G1 to G4), whose axes (X1 to X4) form, in cross-section, the tops of a square and in that the contours of the matrix form four identical cylinder of revolution portions (6, 7, 8, 9) whose axes respectively coincide with the axes of the elementary optical guides.

3. Optical guide according to either of the claims 1 and 2, **characterized in that** each elementary optical guide is monomodal.

4. Optical guide according to any one of the claims 1 to 3, **characterized in that** for each elementary optical guide the ratio of the diameter of the optical sheath to the diameter of the core is approximately 3.

5. Optical guide according to claim 4, **characterized in that** the matrix in which are located the elementary optical guides can also be inscribed in a cylinder with a diameter of approximately 125 µm.

6. Process for the production of a multicore optical guide according to claim 1, said process being **characterized in that** it comprises the following successive stages:
a plurality of elementary blanks (16, 17, 18, 19) is produced, whose precision is compatible with that which is required for the multicore guide, said elementary blanks, comprising an elementary optical guide, are machined with great accuracy and so as to obtain, following the assembly of these blanks, the chosen geometrical model for the multicore optical guide corresponds to a contour defined by cylinder portions, each elementary optical guide has optogeometrical characteristics, namely the diameter of the core of said elementary optical guide and the difference between the optical index of the core is that of the optical sheath of said elementary optical guide and different from those of the elementary optical guides closest thereto, said characteristics being chosen in such a way as to obtain a limited crosstalk between the elementary optical guides when the latter are traversed in the same direction by light having a given wavelength, the thus machined elementary blanks (16, 17, 18, 19) are assembled in accordance with the chosen geometrical model, the machined and assembled elementary blanks are partly welded by means of a bait (25) and
a precise drawing takes place of the assembly of the elementary blanks provided with the bait in order to obtain the multicore optical guide.

7. Process according to claim 6, **characterized in that** each elementary blank (16, 17, 18, 19) is produced in accordance with a process involving the following successive stages:
a hollow silica bar is produced having a thick wall and great geometrical precision,
using a furnace, an internal vapour phase deposition takes place of a vitreous coating in said bar, using a mixture of gaseous compounds made to circulate in said bar, said compounds being able to produce the coating by reacting with one another and
the bar is reduced.

8. Process according to claim 6, **characterized in that** the machining of each elementary blank (16, 17, 18, 19) comprises the formation thereon of one or more flats (23) parallel to the axis of the elementary blank, permitting the assembly of the elementary blanks in accordance with the chosen geometrical model.

9. Process according to claim 8, **characterized in that** production takes place of four elementary blanks (16, 17, 18, 19), on each of them are formed two identical, perpendicular flats (23), which have a common line (D) and which define a cylinder of revolution portion (P) around the axis of said elementary blank, in such a way that the latter admits a plane of symmetry containing the axis of said elementary blank and the line (D) common to the two flats and in that the four, thus machined, elementary blanks are assembled to obtain an assembly in which the four axes of the elementary blanks occupy, in cross-section, the tops of a square and whose contours form four cylinder of revolution portions (P), whose axes respectively coincide with the axes of the elementary blanks.

10. Process according to any one of the claims 6 to 9, **characterized in that** the ratio of the diameter of the optical sheath to the diameter of the core of each elementary blank is approximately 3.

11. Process according to claim 10, **characterized in that** the external diameter of each elementary blank is also chosen in such a way that the multicore guide obtained by drawing the assembly of the elementary blanks can be inscribed in a cylinder of diameter 125 µm.

12. Process according to any one of the claims 6 to 11, **characterized in that** the assembly is provided with a protective coating (28) during its drawing.

13. Process according to claim 12, **characterized in that** the protective coating (28) is also provided with a means (29) for marking the elementary optical guides (27) of the multicore guide formed.
